# EUROPÄISCHE PATENTSCHRIFT

(11) **EP 0 368 012 B1**
(45) Veröffentlichungstag und Bekanntmachung des Hinweises auf die Patenterteilung: **03.08.1994**
(21) Anmeldenummer: 89118866.6
(22) Anmeldetag: 11.10.1989
(51) Int. Cl.: B29C 45/76, B29C 67/24

(54) **Verfahren und Vorrichtung zur Steuerung einer Wachspritzanlage**
Method and apparatus for controlling a wax-moulding plant
Procédé et dispositif pour contrôler une installation de moulage de cire

(30) Priorität: 07.11.1988 DE 3837713
(43) Veröffentlichungstag der Anmeldung: 16.05.1990
(73) Patentinhaber: Dogendorf, Nikolaus, D-75203 Königsbach-Stein (DE)
(72) Erfinder: Dogendorf, Nikolaus, D-75203 Königsbach-Stein (DE)
(74) Vertreter: Frank, Gerhard, Dipl.-Phys.

(56) Entgegenhaltungen:
- EP-A- 0 191 445
- DE-A- 3 024 197
- GB-A- 2 124 967
- PATENT ABSTRACTS OF JAPAN, Band 8, Nr. 76 (M-288)[1513], 9. April 1984;& JP-A-58 222 828 (SUMITOMO JUKIKAI KOGYO K.K.) 24-12-1983
- PATENT ABSTRACTS OF JAPAN, Band 7, Nr. 283 (M-263)[1428], 16. Dezember 1983;& JP-A-58 158 229 (NITSUSEI JIYUSHI KOGYO K.K.) 20-09-1983
- PATENT ABSTRACTS OF JAPAN, Band 7, Nr. 283 (M-263)[1428], 16. Dezember 1983;& JP-A-58 158 230 (NITSUSEI JIYUSHI KOGYO K.K.) 20-09-1983
- PATENT ABSTRACTS OF JAPAN, Band 9, Nr. 124 (M-383)[1847], 29. Mai 1985;& JP-A-60 9628 (OKUMA TEKKOSHO K.K.) 18-01-1985
- PATENT ABSTRACTS OF JAPAN, Band 14, Nr. 315 (M-995)[4258], 6. Juli 1990;& JP-A-2 106 308 (YUUSHIN SEIKI K.K.) 18-04-1990

## Beschreibung

Die Erfindung betrifft eine Wachsspritzanlage, in der das Wachs von einem Vakuumwachsinjektor in eine Gummiform eingespritzt wird, deren Hälften während des Einspritzvorgangs zwischen zwei Platten zusammengehalten werden, wobei die Arbeitsparameter wie Wachsspritzdruck, Wachsspritzdauer und Anpreßdruck dieser Platten für jede Gummiform individuell eingestellt werden.

Eine solche Wachsspritzanlage, deren Aufbau und Betriebsweise ist aus der DE-PS 30 24 197 bekannt, so daß hierauf nicht besonders eingegangen zu werden braucht.

Da in der Praxis für jede unterschiedliche zu gießende Form auch unterschiedliche Werte für die genannten Arbeitsparameter beim Betrieb einer solchen Wachsspritzanlage zu berücksichtigen sind, können bisher nicht mehere Personen an einer solchen Wachsspritzanlage arbeiten, da es für sie praktisch nicht möglich ist, diese Arbeitsparameter und gegebenenfalls die Vakuum-Abschaltung bei nur einer vorhandenen Wachsspritzanlage gleichzeitig manuell einzuregeln, um die Vielzahl an Gummiformen zu handhaben. Die jeweilige individuelle Einstellung der Arbeitsparameter durch die Arbeitskraft, die etwa vier bis zehn Gummiformen gleichzeitig bearbeiten kann (insbesondere wegen der benötigten Auskühlungszeit des Wachses) ist zeitaufwendig und bedeutet letztlich keine optimale Ausnutzung der vorhandenen Wachsspritzanlage.

Aufgabe der Erfindung ist es daher, eine solche Wachsspritzanlage bzw. deren Steuerung so weiterzubilden, daß diese Einstellzeiten für die einzelnen Arbeitsparameter entfallen und somit der Auslastungsgrad einer Wachsspritzanlage wesentlich erhöht wird.

Erfindungsgemäß wird diese Aufgabe gemäß dem kennzeichnenden Teil des Patentanspruchs 1 gelöst,
Der Grundgedanke der Erfindung besteht also in der vollautomatischen Einstellung der Arbeitsparameter der Wachsspritzanlage durch die Gummiform selbst, ohne daß es hierzu noch manueller Einstellvorgänge seitens der Bedienkraft bedarf. Dies ermöglicht den Einsatz von bis zu vier Arbeitskräften an nur einem Vakuum-Wachsinjektor, die beispielsweise halbkreisförmig zum Gerät sitzend angeordnet sind. Die vollautomatische "Eingabe" der Arbeitsparameter hat auch eine Steigerung der Präzision der Spritzergebnisse zur Folge, da einmal als optimal ermittelte Parameterkombinationen immer wieder genau reproduziert werden. Dies ist insbesondere bei der Herstellung von Goldteilen von besonderer Bedeutung, wo es bei manuellen Einstellungen der Arbeitsparameter nicht auszuschließen ist, daß beim späteren Gießen das genaue Gewicht nicht erreicht wird; dies ist bei einer Gewichtsüberschreitung nachteilig für den Händler, da er mehr Gold als kalkuliert abgibt, bei einer Gewichtsunterschreitung nachteilig für den Käufer, da er weniger Gold erhält als angegeben, was zu berechtigten Reklamationen führen kann.

Die erfindungsgemäße Wachsspritzanlage beseitigt durch die präzise Reproduzierbarkeit der Arbeitsparameter und damit der Reproduzierbarkeit des Wachsmodells diese Schwierigkeiten bei der Herstellung von Gußteilen auf der Grundlage des Wachsausschmelzverfahrens. Sie realisiert dieses im wesentlichen durch eine korrespondierende räumliche Anordnung von Kodierfeldern sowohl auf der Oberseite der Gummiform, als auch auf der Unterseite der Anpreßplatte. Jede Kodierung besteht aus einer Kombination von Markierungen. die ihrerseits aus einer definierten Aussparung bestehen, die in der Gummiform eingebracht sind. Je nach Wert des Arbeitsparameters, sind solche Aussparungen in der Gummiform einfach mit Stöpseln oder Deckeln wieder abzudecken, so daß die in der Pressenplatte angeordneten Abtastelemente die erforderliche binäre Information Null bzw. Eins auf einfachste Weise durch Freilassen der Aussparung in der Gummiform oder durch Verschluß dieser Anssparung mittels eines Einsatzelementes übermittelt bekommen.

Eine vergleichbare Vorrichtung zeigt die JP-A-58 158 229 auf dem Gebiet der Spritzgießtechnik; hier wird eine Identifizierung der Spritzgußform und damit auch eine Festlegung der Spritzgießparameter dadurch erzielt, daß eine zusätzliche Platte der Spritzgußform zugeordnet wird, die Schraubenlöcher aufweist, in die Schrauben als Kodierelemente einschraubbar sind.

Diese Schrauben tauchen dann in korrespondierende Ausnehmungen einer Registrierungsanordnung ein und werden dort festgestellt und ein elektrisches Steuersignal wird erzeugt.

Die Umsetzung dieses Prinzips erfolgt also nicht unmittelbar durch Kodierung der Spritzgußform und erfordert mindestens ein zusätzliches Bauteil. Demgegenüber erreicht die Erfindung eine direkte, unmittelbare Kodierung der Gummiform auf überraschend einfache Weise.

Weitere Ausgestaltungen sind den Unteransprüchen entnehmbar.

Ein Ausführungsbeispiel der erfindungsgemäßen Wachsspritzanlage wird im folgenden anhand von Zeichnungen näher erläutert, es zeigen:
- Figur 1:: Einen Vertikalschnitt durch eine Wachsspritzanlage,
- Figur 2:: das erfindungsgemäße Prinzip der Kodierung, und
- Figur 3:: eine schematische Darstellung der Umsetzung der Kodierung gemäß Figur 2 auf einer Wachsspritzanlage gemäß Figur 1.

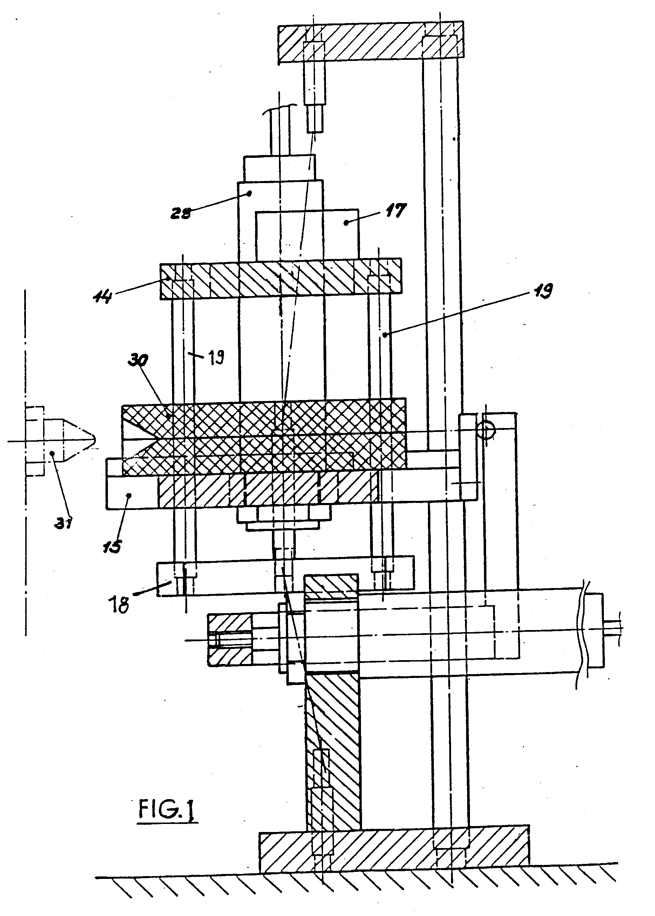

Figur 1 zeigt im Vertikalschnitt eine Wachsspritzanlage; die Einzelheiten und der Betrieb dieser Wachsspritzanlage sind aus der DE-PS 30 24 197 entnehmbar und werden hier nicht näher erläutert. Als hier erfindungswesentlich soll lediglich folgendes festgehalten werden: Die zweigeteilte Gummiform (Matrize, Spritzgießform) 30 liegt auf einer Auflageplatte 15 mit ihrer Öffnung gegenüber der Einspritzdüse 31. Zum Zusammenpressen der beiden Hälften der Gummiform 30 dient eine Anpreßplatte 14, die mittels der Verbindungsbolzen 19 (zwei sichtbar in Figur 1) gehalten ist, die sich bis unterhalb der Anlageplatte 15 erstrecken und dort paarweise über eine Lasche 18 verbunden sind. Beide Laschen 18 werden vom Kolben je einer Kolben-Zylindereinheit 28 beaufschlagt, bei deren Betätigung die Anpreßplatte 14 auf die Oberseite der Gummiform 30 aufgepreßt wird und diese festklemmt.

Zur Steuerung der hierbei wesentlichen Arbeitsparameter wie Wachsspritzdruck, Wachsspritzdauer und Anpreßdruck der Platten ist auf der Gummiform 30 eine Kodierung in Form von Aussparungen vorgesehen, die wahlweise freibleiben können oder mit einem geeigneten Einsatz abschließbar sind.

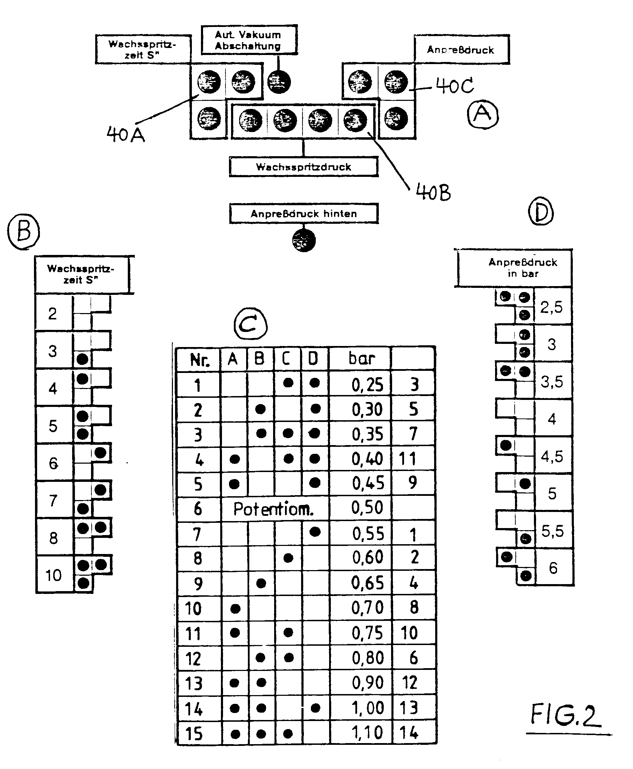

Die Anordnung solcher Markierungen und ihre jeweilige Zusammenfassung zu einem Kodierfeld zur Steuerung eines definierten Arbeitsparameters ist in Figur 2 dargetellt:
Figur 2A zeigt drei Kodierfelder 40A, 40B, 40C, die aus mehreren Markierungen bestehen. Diese Markierungen können sich jeweils im Zustand "Null" oder im Zustand "Eins" befinden, die Kombination dieser Markierungen ermöglicht somit die Zuordnung einer Binärzahl zu einer durch die Anzahl der Markierung gegebenen Werteanzahl für den jeweiligen Arbeitsparameter.

Das Kodierfeld 40A ist dem Arbeitsparameter "Wachsspritzzeit S" zugeordnet, die Bedeutung und die Zuordnung zwischen der Belegung der Markierungen und der Wachsspritzzeit in Sekunden ist in Tabelle B dargestellt: Befinden sich sämtliche drei Markierungen im Zustand "Null" (d.h., sind die zugeordneten Aussparungen 30A, 30B und 30G mit Einlagen 32A,32B und 32G aufgefüllt), so ist diesem Wert eine Wachsspritzzeit S von zwei Sekunden zugeordnet. Bei vollständigem Offenlassen der Aussparungen in der Gummiform entspricht dies einer Wachsspritzzeit S von zehn Sekunden (Tabelle B unten).

Das Kodierfeld 40B ist dem Arbeitsparameter "Wachsspritzdruck" zugeordnet und die Kodiertabelle C zeigt die sich aus der unterschiedlichen Belegung dieser vier Markierungen ergebenden Werte des Wachsspritzdruckes in bar von 0,25 bis 1,1 bar. Hierbei ist hervorzuheben, daß die Kombination Nr. 6 "0000" eine mittlere Wachsspritzdruckregelung von 0,5 bar beinhaltet, die jedoch extern steuerbar ist, diese Kombination der Markierungen im Kodierfeld 40B somit die manuelle Steuerung über ein Außenpotentiometer gewährleistet, also praktisch eine Umschaltung von Automatikbetrieb auf Handbetrieb darstellt, die in diesem Programm integriert ist.

Die vier Markierungen des Kodierfeldes 40B ermöglichen demnach bis zu 2⁴ = 16 Kombinationen des Wachsspritzdruckes.

Schließlich dient das Kodierfeld 40C zur Steuerung des Anpreßdruckes gemäß Kodiertabelle D in Figur 2, hieraus ist zu entnehmen, daß infolge der drei Markierungen des Kodierfeldes 40C insgesamt 2³ = 8 verschiedene Kombinationen von 2,5 bis 6 bar eingestellt werden können.

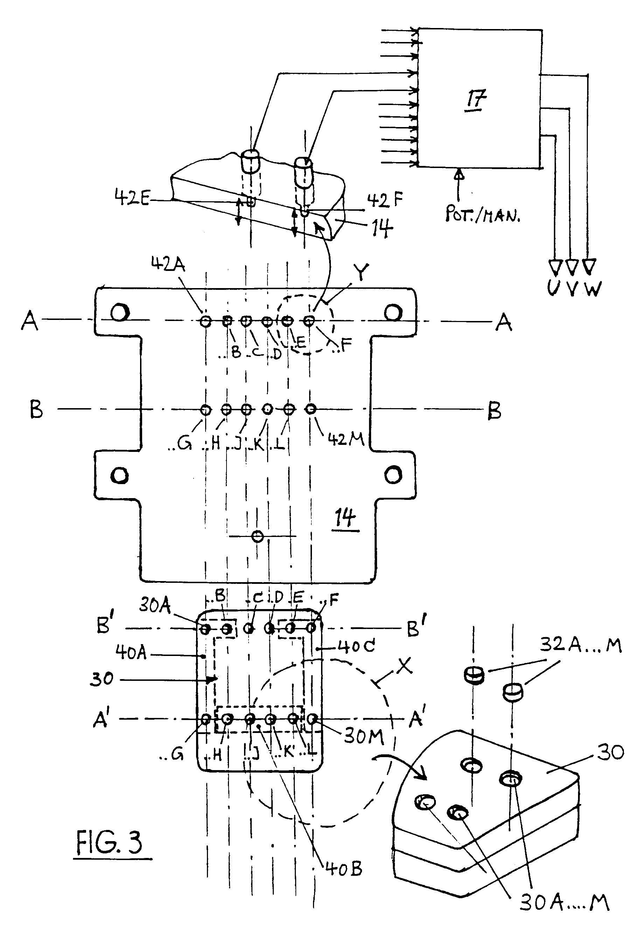

Eine einzelne Markierung "automatische Vakuumabschaltung" regelt die Zuschaltung des Vakuums (Aussparung in der Gummiform offen = ohne Vakuum, Aussparung in der Gummiform mit Einsatz geschlossen = mit Vakuum), eine weitere einzelne Markierung "Anpreßdruck hinten" dient zur Ansteuerung eines zusätzlichen Zylinders bei Überlänge der Gummiform oder der Anpreßplatte. Figur 3 zeigt schematisch die Umsetzung diese Kodierprinzips bei einer Wachsspritzanlage gemäß Figur 1:
Auf der Oberseite der oberen Hälfte der Gummiform 30 sind kreisförmige Aussparungen 30A bis 30M eingebracht, beispielsweise werden mit Hilfe einer Platte mit eingesetzten Stiften diese Aussparungen mit einvulkanisiert.

Diese Aussparungen 30A bis 30M stellen also die Markierungen gemäß Figur 2 dar. Jede Aussparung kann in einen von zwei binären Zuständen versetzt werden, sie bleibt nämlich entweder offen, oder sie wird mit einem geeigneten Einsatz, beispielsweise einem Stöpsel 32A...32M verschlossen.

Die in Figur 3 entlang den Linien A-A und B-B (bzw. A′-A′ und B′-B′) angeordneten zwölf Aussparungen 30A...M sind den drei Kodierfeldern 40A...40C zugeteilt, wie dies in Figur 2 erläutert ist.

Durch Zusetzen der Aussparungen mit Stöpseln läßt sich dabei jede der in Figur 2B,2C,2D dargestellten Wertekombinationen erreichen.

In der Praxis stellt sich also eine solche Gummiform 30 in der Aufsicht etwa im unteren Teil der Figur 3 dar, also mit einer Anzahl von offenen Aussparungen und mit einer Anzahl von mit Einsätzen abgeschlossenen Aussparungen.

Entsprechend dieser Anordnung der Kodierfelder bzw. Markierungen auf der Gummiform 30 sin auf der Unterseite der Anpreßplatte 14 Abtastelemente 42A...42M in Form von Stößeln ausgebildet, deren räumliche Anordnung so ist, daß jeder (offenen oder geschlossenen) Aussparung 30A...30M auf der Oberseite der Gummiform 30 ein entsprechender Stößel 42A...42M auf der Unterseite der Anpreßplatte 14 zugeordnet ist, d.h., bei der praktischen Anwendung liegen die Linien A-A und A′-A′ bzw. B-B und B′-B′ jeweils in einer gemeinsamen vertikalen Ebene übereinander.

Die nach unten aus der Abdeckplatte 14 herausragenden Stößel 42A...42M nehmen nun ebenfalls korrespondierend zum "binären Zustand" der Oberseite der Gummiform 30 diese Information auf, in dem nämlich entweder der Stößel 42 in die offene Aussparung eintaucht oder infolge eines dort vorhandenen Einsatzes nach oben gedrückt wird, wenn sich die Anpreßplatte 14 auf die Gummiform 30 absenkt. Dadurch werden also zwei Schaltzustände der Abtastelemente definiert, entsprechend den beiden möglichen Zuständen jeder Markierung in der Gummiform 30.

Die gemäß Kodiertabellen Figur 2B... Figur 2D binär kodierten Arbeitsparameter werden demnach in Schaltzustände dieser Abtastelemente umgesetzt, die die jeweilige binäre Information an einen Schaltkreis 17 weitergeben. In diesem Schaltkreis werden diese binären Informationen über entsprechende integrierte Schaltungen zur Ansteuerung der betreffenden Regelelemente verwendet, was symbolisch durch die Ausgangsleitungen U,V,W dargestellt ist. Hierbei werden zweckmäßigerweise elektronisch gesteuerte Druckregelventile eingesetzt, die digital angesteuert werden können und den Luftdruck im Wachskessel (Wachsspritzdruck) bzw. in den zwei Pneumatikzylindern 28 (Figur 1) der Wachsspritzanlage steuern.

Im folgenden soll noch kurz ein gesamter Arbeitszyklus der Wachsspritzanlage erläutert werden:
Zunächst muß anhand des zu spritzenden Modells und der dafür vorgeshenen Gummiform die optimale Einstellung der Arbeitsparameter manuell ermittelt werden. Dies kann einfach dadurch erfolgen, daß die Arbeitskraft die Einsatzelemente für die Aussparungen in der Gummiform einsetzt bzw. so lange austauscht, bis das Spritzergebnis optimiert ist. Diese als optimal festgestellte Kombination bleibt dann bestehen und steuert bei jedem nachfolgenden Spritztakt die Arbeitsparameter und gewährleistet somit ein dauerhalft optimales Spritzergebnis.

Die so "kodierte" Gummiform wird dann jeweils in die Wachsspritzanlage eingeführt und die Kodierung wird, wie oben beschrieben, beim Absenken der Anpreßplatte 14 "übernommen" und aus der derart gewonnenen Binärinformation werden die aktuellen Werte der Arbeitsparameter gewonnen und die entsprechenden Druckregelventile angesteuert.

## Patentansprüche

1. Wachsspritzanlage, in der das Wachs von einem Vakuumwachsinjektor in eine Gummiform eingespritzt wird, deren Hälften während des Einspritzvorgangs zwischen zwei Platten zusammengehalten werden, wobei die Arbeitsparameter wie Wachsspritzdruck, Wachsspritzdauer und Anpreßdruck dieser Platten für jede Gummiform individuell eingestellt werden,
dadurch gekennzeichnet, daß auf der Oberseite jeder Gummiform (30) für die ihr zugeordneten Arbeitsparameter eine Kodierung aus einer Kombination von Markierungen in Form von definierten Aussparungen aufweist, die wahlweise frei bleiben oder mit einem geeigneten Einsatz abschließbar sind, so daß ein individueller Wert eines Arbeitsparameters aus einer definierten räumlichen Kombination von N Aussparungen festlegbar ist, und daß diesen Aussparungen (30A...30M) Abtastelemente (42) auf der Unterseite der Anpreßplatte (14) zugeordnet sind, die nach dem Einführen der Gummiform (30) in die Wachsspritzposition den kodierten Wert des/der Arbeitsparameter (s) erfassen und das jeweils zugeordnete Regelelement zur Einstellung dieses Wertes ansteuern.

2. Wachsspritzanlage nach Anspruch 1, dadurch gekennzeichnet, daß jedem Arbeitsparameter ein Kodierfeld (40) mit einer bestimmten Anzahl derartiger Aussparungen zugeordnet ist, so daß ein individueller Wert eines Arbeitsparameters aus der räumlichen Kombination der N Aussparungen innerhalb seines Kodierfeldes festlegbar ist.

## Claims

1. Wax spraying system, in which the wax is sprayed into a rubber mould by a vacuum wax injector, the halves of which mould are held together between two plates during the injection process, the operational parameters, such as wax spraying pressure, wax spraying period and contact pressure of these plates, being individually set for each rubber mould, characterised in that a code, comprising a combination of markers in the form of specific apertures, is provided on the upper surface of each rubber mould (30) for the operational parameters associated therewith, said apertures either remaining free or being sealable with a suitable insert, so that an individual value of an operational parameter is determinable from a specific spatial combination of N apertures, and in that scanning means (42) are associated with these apertures (30A...30M) on the underside of the pressure plate (14), which scanning means detect the coded value of the operational parameter(s) after the rubber mould (30) has been introduced into the wax spraying position and trigger the respectively associated regulating means in order to set this value.

2. Wax spraying system according to claim 1, characterised in that a code panel (40), having a specific number of such apertures, is associated with each operational parameter, so that an individual value of an operational parameter is determinable from the spatial combination of the N apertures within its code panel.

## Revendications

1. Installation d'injection de cire dans laquelle la cire est injectée par un injecteur à vide dans un moule en caoutchouc dont les moitiés sont, pendant l'injection, tenues ensemble entre deux plaques, les paramètres de fonctionnement comme la pression et la durée d'injection de la cire et la pression de serrage de ces plaques étant réglés individuellement pour chaque moule en caoutchouc, caractérisée par le fait que sur le dessus de chaque moule en caoutchouc (30) est prévue pour les paramètres de fonctionnement associés à celui-ci un codage constitué d'une combinaison de marques formées d'évidements déterminés qui, au choix, restent dégagés ou peuvent être fermés avec un élément rapporté approprié, de sorte qu'une valeur individuelle d'un paramètre de fonctionnement peut être fixée à partir d'une combinaison spatiale déterminée de N évidements, et qu'à ces évidements (30A, ..., 30M) sont associés, sur le dessous de la plaque de serrage (14), des éléments palpeurs (42) qui, après la mise du moule en caoutchouc (30) à l'emplacement d'injection de cire, saisissent la valeur codée du ou des paramètres de fonctionnement et commandent l'élément de réglage associé pour le réglage du paramètre à cette valeur.

2. Installation d'injection de cire selon la revendication 1, caractérisée par le fait qu'à chaque paramètre de fonctionnement est associé un champ de codage (40) comportant un nombre déterminé de tels évidements, de sorte qu'une valeur individuelle d'un paramètre de fonctionnement peut être fixée à partir de la combinaison spatiale des N évidements à l'intérieur de son champ de codage.
